# EUROPÄISCHE PATENTSCHRIFT

(11) **EP 0 830 972 B1**
(45) Veröffentlichungstag und Bekanntmachung des Hinweises auf die Patenterteilung: **02.04.2003**
(21) Anmeldenummer: 97115060.2
(22) Anmeldetag: 30.08.1997
(51) Int. Cl.: B60N 2/28

(54) **Kindersitz mit einem schalenförmigen Aufnahmeteil**
Child seat with a shell shaped seat part
Siège d'enfant avec une assise en forme de coquille

(30) Priorität: 05.09.1996 DE 19636013
(43) Veröffentlichungstag der Anmeldung: 25.03.1998
(73) Patentinhaber: ADAM OPEL AG, 65423 Rüsselsheim (DE)
(72) Erfinder: Dünnebeil, Joachim, 55218 Ingelheim (DE); Dollinger, Rainer, Dipl.-Ing. (FH), 82131 Gauting-Unterbrunnen (DE)
(74) Vertreter: Kümpfel, Heinz, Dipl.-Ing.

(56) Entgegenhaltungen:
- EP-A- 0 197 910
- DE-A- 3 137 917
- DE-C- 4 220 686
- US-A- 4 615 562
- US-A- 4 913 490
- US-A- 5 383 708

## Beschreibung

Die Erfindung betrifft einen Kindersitz oder dergleichen mit zumindest einem zur Aufnahme eines Kindes vorgesehenen schalenförmigen Aufnahmeteil nach dem Oberbegriff des Patentanspruches 1.

Kindersitze oder dergleiche Einrichtungen der genannten Art, beispielsweise Kinderliegen, werden derzeit zur sicheren Aufnahme eines Kindes in Kraftfahrzeugen verwendet und sind daher allgemein bekannt. Als Beispiel für den Stand der Technik sei auf die DE 42 20 686 C1 verwiesen, die einen Kindersitz zum Aufstellen auf einen Fahrzeugsitz sowohl in als auch entgegen der Fahrtrichtung (Reboard-System) beschreibt, wobei beim Aufstellen des Kindersitzes entgegen der Fahrtrichtung zum Ausgleich der Schräglage des Sitzpolsters des Fahrzeugsitzes ein unter dem Sitzteil des Kindersitzes anbringbarer Zwischenkeil vorgesehen ist. Nachteilig bei dieser Lösung ist jedoch, daß der beim Aufstellen des Kindersitzes in Fahrtrichtung nicht mehr benötigte Zwischenkeil vom Kindersitz entfernt und separat, beispielsweise im Kofferraum des Kraftfahrzeuges, aufbewahrt werden muß.

Der vorliegenden Erfindung liegt daher die Aufgabe zugrunde, die Handhabung eines Kindersitzes oder dergleichen mit zumindest einem zur Aufnahme eines Kindes vorgesehenen schalenförmigen Aufnahmeteil beim Aufstellen sowohl in als auch entgegen der Fahrtrichtung auf einem Fahrzeugsitz zu vereinfachen.

Diese Aufgabe wird erfindungsgemäß durch die kennzeichnenden Merkmale des Patentanspruches 1 gelöst. Vorteilhafte Weiterbildungen der Erfindung sind in den Unteransprüchen enthalten.

Durch die schräge Ausbildung von Aufnahmeteil und Zwischenkeil an den zueinander zugewandten Seiten kann das Aufnahmeteil durch einfaches Drehen des Zwischenkeils um 180° sowohl in als auch entgegen der Fahrtrichtung des Kraftfahrzeuges auf dem Sitzpolster des Fahrzeugsitzes aufgestellt und befestigt werden. Bei der Ausrichtung des Aufnahmeteils beispielsweise entgegen der Fahrtrichtung addieren sich die der jeweiligen Schräge zugrundegelegten Winkel, so daß die Schräglage des Sitzpolsters ausgeglichen ist. Bei der Ausrichtung des Aufnahmeteils in Fahrtrichtung sind diese Winkel dagegen gegenläufig ausgerichtet, wodurch auch hier eine optimale Auflage des Aufnahmeteils auf dem Sitzpolster erreicht wird. Durch die gegenüber dem Aufnahmeteil in etwa Längs- und/oder Querrichtung des Fahrzeuges verschiebbare Gestaltung des Zwischenkeils kann der Kindersitz oder dergleichen dabei bei verschiedenen Kinderaltersklassen und hinsichtlich der Breite und Tiefe bei unterschiedlich gestalteten Fahrzeugsitzen Verwendung finden.

Die Erfindung wird nachfolgend anhand der Zeichnung mit mehreren Ausführungsbeispielen näher erläutert. Die Zeichnung zeigt teilweise schematisch in
- Fig. 1: einen Blick in den Fahrzeuginnenraum mit einem auf dem Beifahrersitz entgegen der Fahrtrichtung aufgestellten Kindersitz;
- Fig. 2: eine Darstellung gemäß Fig. 1, jedoch aus einer anderen Perspektive und mit einem alternativ ausgebildeten Zwischenkeil;
- Fig. 3: eine Ansicht gemäß Fig. 2 mit einem noch nicht montierten Kindersitz;
- Fig. 4: eine vergrößerte einzelne Darstellung des Zwischenkeils nach Fig. 3;
- Fig. 5: eine perspektivische Ansicht eines in Fahrtrichtung auf einem Rücksitz aufgestellten Kindersitzes.

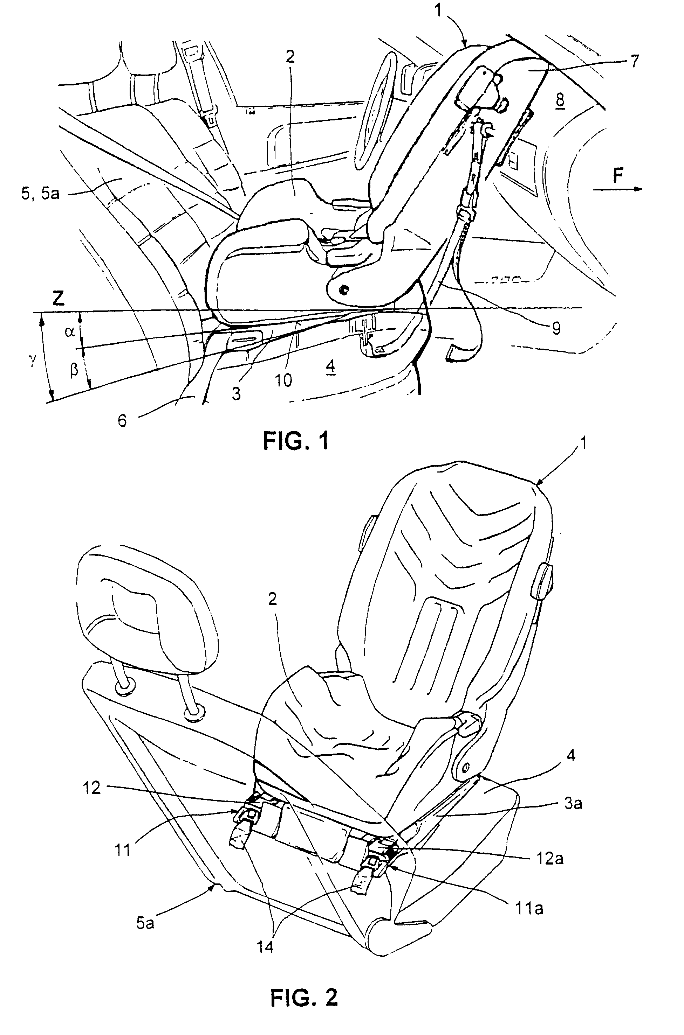

Die Fig. 1 zeigt einen entgegen der Fahrtrichtung F des Kraftfahrzeuges auf einem Beifahrersitz 5a aufgestellten Kindersitz 1, welcher im wesentlichen aus einem Aufnahmeteil 2 und einem gegenüber diesem neigungsverstellbaren Rückenteil 7 besteht und mittels eines an einem mit dem Aufnahmeteil 2 verbundenen Zwischenkeil 3 angreifenden Gurtes 6 auf dem Sitzpolster 4 festgehalten ist. Das Rükkenteil 7 stützt sich dabei an einer Armaturentafel 8 ab und ist zusätzlich mittels eines mit dem Rückenteil 7 lösbar verbundenen Spanngurtes 9 an einem nicht dargestellten Sitzrahmen des Beifahrersitzes 5a befestigt.

Das Aufnahmeteil 2 ist zur Aufnahme eines Kindes schalenförmig ausgebildet und weist im unteren Bereich eine Schräge 10 auf, welche mit einer waagerechten Längslinie **Z** einem spitzen Winkel α bildet. Der mit dem Aufnahmeteil 2 lösbar verbundene Zwischenkeil 3 weist auch einen spitzen Winkel β auf, welcher nach der Größe dem Winkel α entspricht. In der dargestellten Ausrichtung des Kindersitzes 1 addieren sich die Winkel α und β, so daß die Summe dieser Winkel α und β einem Winkel γ entspricht, welcher durch die Schräglage des Sitzpolsters 4 gegenüber der Längslinie **Z** gebildet ist. Die Schräge 10 am Aufnahmeteil 2 und der Zwischenkeil 3 heben somit die Schräglage des Sitzpolsters 4 auf und ermöglichen dadurch eine stabile Halterung des Kindersitzes 1 auf dem Sitzpolster 4.

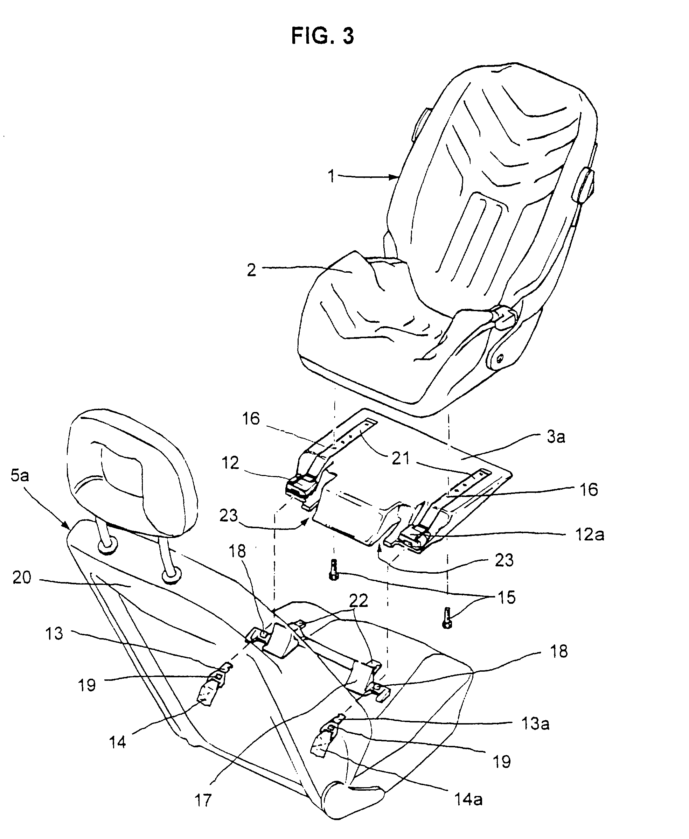

In Fig. 2 ist eine alternative Befestigung des Kindersitzes 1 auf dem Sitzpolster 4 gezeigt, bei welcher der Zwischenkeil 3a mittels zweier beabstandet angeordneter Rastvorrichtungen 11, 11a auf dem Sitzpolster 4 befestigt ist. Wie Fig. 3 noch weiter verdeutlicht, besteht die jeweilige Rastvorrichtung 11, 11a im wesentlichen aus einem am Zwischenkeil 3a angeordneten Gurtschloß 12, 12a, welches lösbar eine Steckzunge 13, 13a aufnimmt, die an einem Ende des mit dem Beifahrersitz 5a auf eine nicht näher dargestellte Weise verbundenen Gurtes 14 befestigt ist. Die Steckzungen 13, 13a sind dabei lösbar mit einem in der Kehle zwischen der Rückenlehne 20 und dem Sitzpolster 4 angeordneten gemeinsamen Adapterteil 17 verbunden, wozu am Adapterteil 17 Rastnasen 18 und an den Steckzungen 13, 13a jeweils eine Rastöffnung 19 vorgesehen sind. Am Adapterteil 17 sind weiterhin Führungsnasen 22 vorgesehen, die bei der Montage des Kindersitzes 1 zum Positionieren des Zwischenkeils 3a am Adapterteil 17 in Schlitze 23 am Zwischenkeil 3a einführbar sind.

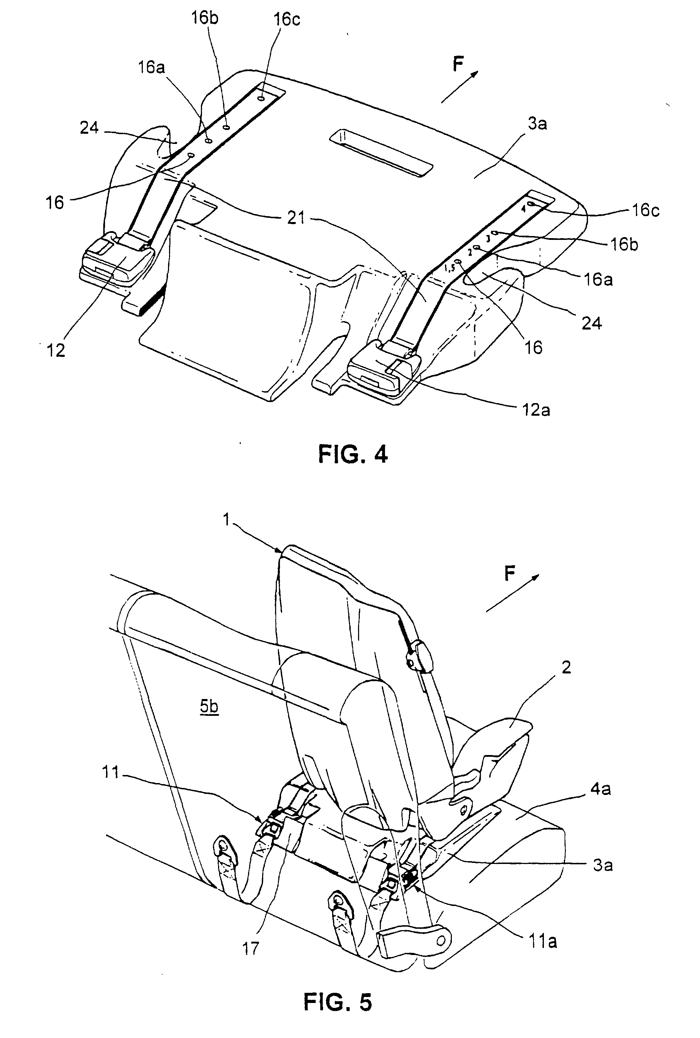

Zur Erhöhung der Stabilität der Befestigung des Kindersitzes 1 sind an dem aus Kunststoff gebildeten Zwischenkeil 3a zwei fest mit diesem durch Nieten verbundene Blechstreifen 21 vorgesehen, welche an jeweils einem Ende formschlüssig die Gurtschlösser 12, 12a haltern. Die Befestigung des Zwischenkeils 3a am Aufnahmeteil 2 erfolgt dabei mittels Schrauben 15, welche die Bohrungen 16 am Zwischenkeil 3a und an den Blechstreifen 21 durchsetzen und in nicht dargestellte Gewindehülsen am Aufnahmeteil 2 eingedreht sind. Wie insbesondere aus Fig. 4 ersichtlich, sind am Zwischenkeil 3a und an den Blechstreifen 21 mehrere Bohrungen 16 bis 16c angeordnet, welche in Längsrichtung (Fahrtrichtung **F**) rasterförmig ausgerichtet sind und eine Verstellbarkeit des Zwischenkeils 3a gegenüber dem Aufnahmeteil 2 ermöglichen. Weiterhin ist am Zwischenkeil 3a an beiden Seiten jeweils ein Lagerungsausschnitt 24 vorgesehen, in den der Gurt 6 (Fig. 1) zum Festhalten des Zwischenkeils 3a eingeführt werden kann. Mit einer solchen Ausbildung des Zwischenkeils 3a kann der Kindersitz 1 zur Beförderung von Kindern unterschiedlicher Altersklassen auch bei Fahrzeugsitzen, die keine Steckzungen 13, 13a für die Gurtschlösser 12, 12a aufweisen, verwendet werden.

Der Kindersitz 1 kann auch, wie in Fig. 5 dargestellt, in Fahrtrichtung **F** ausgerichtet auf dem Sitzpolster 4a eines Rücksitzes 5b befestigt werden. Dies ist durch den um 180° gedreht mit dem Aufnahmeteil 2 verbundenen Zwischenkeil 3a möglich, da durch die in diesem Falle gegenläufigen Winkel α und β am Aufnahmeteil 2 und am Zwischenkeil 3a die Schräglage des Sitzpolsters 4a ausgeglichen ist. Bei dieser Anordnung des Kindersitzes 1 kann bei Bedarf das Rückenteil 7 des Kindersitzes 1 zur Anpassung an verschiedene Altersstufen abgenommen werden, so dass nur das Aufnahmeteil 2 zusammen mit dem Zwischenkeil 3, 3a als Sitzerhöhung verwendet wird.

## Patentansprüche

1. Kindersitz (1) oder dergleichen mit zumindest einem zur Aufnahme eines Kindes vorgesehenen schalenförmigen Aufnahmeteil (2), welches auf einem Sitzpolster (4, 4a) eines Fahrzeugsitzes (5, 5a, 5b) sowohl in als auch entgegen der Fahrtrichtung befestigbar ist, wobei unter dem Aufnahmeteil (2) bei dessen Ausrichtung entgegen der Fahrtrichtung ein mit diesem lösbar verbundener Zwischenkeil (3, 3a) zum Ausgleich der nach hinten abfallend verlaufenden Schräglage des Sitzpolsters (4, 4a) vorgesehen ist,
**dadurch gekennzeichnet, dass** das Aufnahmeteil (2) in zwei um 180° gegeneinander verdrehte Ausrichtungen am Zwischenkeil (3, 3a) befestigbar ist und dass das Aufnahmeteil (2) im Verbindungsbereich mit dem Zwischenkeil (3, 3a) eine Schräge (10) aufweist, welche bei der Ausrichtung des Aufnahmeteils (2) entgegen der Fahrtrichtung (**F**) die Schräglage des Sitzpolsters (4, 4a) teilweise ausgleicht.

2. Kindersitz oder dergleichen nach Anspruch 1, **dadurch gekennzeichnet, daß** die Schräge (10) des auf dem Fahrzeugsitz (5, 5a, 5b) befestigten Aufnahmeteils (2) im Längsschnitt einen Winkel α mit einer waagerechten Längslinie (**Z**) bildet, welcher etwa einem den spitzen Winkel des Zwischenkeils (3, 3a) bildenden Winkel β entspricht und daß die Summe der Winkel α und β etwa einem Winkel γ entspricht, welcher durch die Schräglage des Sitzpolsters (4) gebildet ist.

3. Kindersitz oder dergleichen nach Anspruch 2, **dadurch gekennzeichnet, daß** der Winkel α etwa 7,5° beträgt.

4. Kindersitz oder dergleichen nach einem der Ansprüche 1 bis 3, **dadurch gekennzeichnet, daß** der Zwischenkeil (3, 3a) gegenüber dem Aufnahmeteil (2) in Längs- und/oder Querrichtung verschiebbar ausgebildet ist.

5. Kindersitz oder dergleichen nach einem der Ansprüche 1 bis 4, **dadurch gekennzeichnet, daß** der Zwischenkeil (3, 3a) mittels zumindest einer Schraubverbindung am Aufnahmeteil (2) befestigbar ist.

6. Kindersitz oder dergleichen nach Anspruch 5, **dadurch gekennzeichnet, daß** die Schraubverbindung aus einer am Aufnahmeteil (2) vorgesehenen Gewindehülse besteht, in die eine eine Bohrung (16, 16a, 16b, 16c) am Zwischenkeil (2) durchsetzende Schraube (15) eindrehbar ist.

7. Kindersitz oder dergleichen nach einem der Ansprüche 4 bis 6, **dadurch gekennzeichnet, daß** zur verschiebbaren Befestigung des Zwischenkeils (3, 3a) am Aufnahmeteil (2) mehrere Gewindehülsen oder am Zwischenkeil (3, 3a) mehrere Bohrungen (16, 16a, 16b, 16c) rasterförmig angeordnet sind.

8. Kindersitz oder dergleichen nach einem der Ansprüche 1 bis 4, **dadurch gekennzeichnet, daß** der Zwischenkeil (3, 3a) verrastbar mit dem Aufnahmeteil (2) verbunden ist.

9. Kindersitz oder dergleichen nach einem der Ansprüche 1 bis 4 und 8, **dadurch gekennzeichnet, daß** zur verschiebbaren Befestigung des Zwischenkeils (3, 3a) am Aufnahmeteil (2) an sich bekannte Rastelemente am Aufnahmeteil (2) oder am Zwischenkeil (3, 3a) rasterförmig angeordnet sind.

10. Kindersitz oder dergleichen nach einem der Ansprüche 1 bis 9, **dadurch gekennzeichnet, daß** am Zwischenkeil (3a) beabstandet zwei Gurtschlösser (12, 12a) oder dergleichen und am Fahrzeugsitz (5, 5a, 5b) im Bereich der Kehle zwischen dem Sitzpolster (4, 4a) und der Rückenlehne (20) zwei mit dem Fahrzeug oder dem Fahrzeugsitz (5, 5a, 5b) verbundene Steckzungen (13, 13a) zur lösbaren Aufnahme der Gurtschlösser (12, 12a) oder dergleichen vorgesehen sind.

11. Kindersitz oder dergleichen nach Anspruch 10, **dadurch gekennzeichnet, daß** die Steckzungen (13, 13a) jeweils an einem mit dem Fahrzeug oder dem Fahrzeugsitz (5, 5a, 5b) zu verankernden, zwischen dem Sitzpolster (4, 4a) und der Rückenlehne (20) des Fahrzeugsitzes (5, 5a, 5b) hindurchführenden Gurt (14) angeordnet sind.

12. Kindersitz oder dergleichen nach einem der Ansprüche 1 bis 9, **dadurch gekennzeichnet, daß** das Aufnahmeteil (2) und/oder der Zwischenkeil (3, 3a) zur Befestigung auf dem Sitzpolster (4, 4a) mittels der im Fahrzeug vorhandenen Sicherheitsgurte und/oder mittels gesonderter Gurte (6) ausgebildet sind.

## Claims

1. Child seat (1) or the like with at least one shell-like receiving portion (2) which is provided for receiving a child and which can be fixed to a seat cushion (4, 4a) of a vehicle seat (5, 5a, 5b) both in the direction of travel and in the opposite direction, wherein under the receiving portion (2) when it is oriented in the direction opposite the direction of travel is provided an intermediate wedge (3, 3a) which is releasably connected to the latter to compensate for the inclined position of the seat cushion (4, 4a) sloping down to the rear, **characterised in that** the receiving portion (2) can be fixed to the intermediate wedge (3, 3a) in two orientations rotated through 180° from each other and **in that** the receiving portion (2) in the region of connection to the intermediate wedge (3, 3a) comprises a slope (10) which, when the receiving portion (2) is oriented in the direction opposite the direction of travel (F), partially compensates for the inclined position of the seat cushion (4, 4a).

2. Child seat or the like according to claim 1, **characterised in that** the slope (10) of the receiving portion (2) fixed to the vehicle seat (5, 5a, 5b) in longitudinal section forms an angle α with a horizontal longitudinal line (Z) which roughly corresponds to an angle β forming the acute angle of the intermediate wedge (3, 3a) and **in that** the sum of the angles α and β roughly corresponds to an angle γ which is formed by the inclined position of the seat cushion (4).

3. Child seat or the like according to claim 2, **characterised in that** the angle α is approximately 7.5°.

4. Child seat or the like according to any of claims 1 to 3, **characterised in that** the intermediate wedge (3, 3a) is constructed so as to be slidable relative to the receiving portion (2) in the longitudinal and/or transverse direction.

5. Child seat or the like according to any of claims 1 to 4, **characterised in that** the intermediate wedge (3, 3a) can be fixed to the receiving portion (2) by means of at least one screw connection.

6. Child seat or the like according to claim 5,
**characterised in that** the screw connection consists of a threaded sleeve which is provided on the receiving portion (2) and into which can be screwed a bolt (15) passing through a bore (16, 16a, 16b, 16c) on the intermediate wedge (2).

7. Child seat or the like according to any of claims 4 to 6, **characterised in that**, for slidable fixing of the intermediate wedge (3, 3a), on the receiving portion (2) are arranged several threaded sleeves or on the intermediate wedge (3, 3a) are arranged several bores (16, 16a, 16b, 16c) in a pattern.

8. Child seat or the like according to any of claims 1 to 4, **characterised in that** the intermediate wedge (3, 3a) is latchably connected to the receiving portion (2).

9. Child seat or the like according to any of claims 1 to 4 and 8, **characterised in that**, for slidable fixing of the intermediate wedge (3, 3a) to the receiving portion (2), latch elements known in the art are arranged on the receiving portion (2) or on the intermediate wedge (3, 3a) in a pattern.

10. Child seat or the like according to any of claims 1 to 9, **characterised in that** on the intermediate wedge (3a) spaced apart are provided two belt locks (12, 12a) or the like and on the vehicle seat (5, 5a, 5b) in the region of the valley between the seat cushion (4, 4a) and the backrest (20) are provided two plug-in tongues (13, 13a) connected to the vehicle or to the vehicle seat (5, 5a, 5b) for releasably receiving the belt locks (12, 12a) or the like.

11. Child seat or the like according to claim 10, **characterised in that** the plug-in tongues (13, 13a) are in each case arranged on a belt (14) to be anchored to the vehicle or to the vehicle seat (5, 5a, 5b) and passing through between the seat cushion (4, 4a) and the backrest (20) of the vehicle seat (5, 5a, 5b).

12. Child seat or the like according to any of claims 1 to 9, **characterised in that** the receiving portion (2) and/or the intermediate wedge (3, 3a) are designed for fixing to the seat cushion (4, 4a) by means of the safety belts existing in the vehicle and/or by means of separate belts (6).

## Revendications

1. Siège pour enfant (1) ou similaire, avec au moins une partie assise (2) en forme de coque, destinée à recevoir un enfant, qui peut être fixée sur un coussin de siège (4, 4a) d'un siège (5, 5a, 5b) de véhicule automobile aussi bien dans le sens du déplacement que dans le sens opposé au déplacement, une cale intermédiaire (3, 3a) liée de manière démontable à la partie assise (2) étant prévue sous ladite partie assise, dans les cas où celle-ci est orientée dans le sens opposé au déplacement, aux fins de compenser l'inclinaison vers l'arrière du coussin de siège (4, 4a), **caractérisé en ce que** la partie assise (2) peut être fixée à la cale intermédiaire (3, 3a) dans deux positions en orientation mutuellement décalées de 180° et **en ce que** la partie assise (2), dans la zone de liaison avec la cale intermédiaire (3, 3a), présente une surface inclinée (10) qui, lorsque la partie assise (2) est orientée dans le sens opposé au déplacement (F), compense partiellement l'inclinaison du coussin de siège (4, 4a).

2. Siège pour enfant ou similaire selon la revendication 1, **caractérisé en ce que** la surface inclinée (10) de la partie assise (2) fixée au siège de véhicule (5, 5a, 5b), en coupe longitudinale, forme avec un axe longitudinal (Z) horizontal un angle α qui correspond sensiblement à un angle β qui constitue l'angle aigu de la cale intermédiaire (3, 3a) et **en ce que** la somme de l'angle α et de l'angle β correspond sensiblement à un angle γ formé par l'inclinaison du coussin de siège (4).

3. Siège pour enfant ou similaire selon la revendication 2, **caractérisé en ce que** l'angle α est d'environ 7,5°.

4. Siège pour enfant ou similaire selon une des revendications 1 à 3, **caractérisé en ce que** la cale intermédiaire (3, 3a) est réglable dans la direction longitudinale et/ou la direction transversale par rapport à la partie assise (2).

5. Siège pour enfant ou similaire selon une des revendications 1 à 4, **caractérisé en ce que** la cale intermédiaire (3, 3a) est fixée à la partie assise (2) à l'aide d'une liaison vissée.

6. Siège pour enfant ou similaire selon la revendication 5, **caractérisé en ce que** la liaison vissée comprend une douille filetée prévue sur la partie assise (2), dans laquelle est vissée une vis (15) qui traverse un trou (16, 16a, 16b, 16c) dans la cale intermédiaire (3, 3a).

7. Siège pour enfant ou similaire selon une des revendications 4 à 6, **caractérisé en ce que** pour la fixation réglable de la cale intermédiaire (3, 3a) à la partie assise (2), plusieurs douilles filetées sont prévues en matrice sur la partie assise (2) ou plusieurs trous (16, 16a, 16b, 16c) sont aménagés en matrice dans la cale intermédiaire (3, 3a).

8. Siège pour enfant ou similaire selon une des revendications 1 à 4, **caractérisé en ce que** la cale intermédiaire (3, 3a) est liée par encliquetage à la partie assise (2).

9. Siège pour enfant ou similaire selon une des revendications 1 à 4 et 8, **caractérisé en ce que** pour la fixation réglable de la cale intermédiaire (3, 3a) à la partie assise (2), des éléments d'encliquetage connus en soi sont disposés en matrice sur la partie assise (2) et sur la cale intermédiaire (3, 3a).

10. Siège pour enfant ou similaire selon une des revendications 1 à 9, **caractérisé en ce qu'**il est prévu sur la cale intermédiaire (3a), deux boucles de ceinture (12, 12a) ou similaires espacées et, sur le siège de véhicule (5, 5a, 5b), dans la région du creux entre le coussin de siège (4, 4a) et le dossier (20), deux pattes (13, 13a) qui sont liées au véhicule ou au siège de véhicule (5, 5a, 5b) pour recevoir de manière séparable les boucles de ceinture (12, 12a) ou similaires.

11. Siège pour enfant ou similaire selon la revendication 10, **caractérisé en ce que** les pattes (13, 13a) sont disposées chacune sur une ceinture (14) à fixer au véhicule ou au siège de véhicule (5, 5a, 5b), qui passe entre le coussin de siège (4, 4a) et le dossier (20).

12. Siège pour enfant ou similaire selon une des revendications 1 à 9, **caractérisé en ce que** la partie assise (2) et/ou la cale intermédiaire (3, 3a) sont agencées en vue de leur fixation sur le coussin de siège (4, 4a) à l'aide des ceintures de sécurité du véhicule et/ou de ceintures spéciales (6).
